# EUROPEAN PATENT APPLICATION

(11) **EP 1 081 943 A1**
(43) Date of publication of application: **07.03.2001**
(21) Application number: 00114435.1
(22) Date of filing: 05.07.2000
(51) Int. Cl.: H04N 5/225, H04N 7/14, H04N 5/232

(54) **Digital transceiver camera**

(30) Priority: 31.08.1999 US 387303
(71) Applicant: MITSUBISHI DENKI KABUSHIKI KAISHA, Tokyo 100-8310 (JP)
(72) Inventor: Waters, Richard C., Concord, MA 01742 (US)
(74) Representative: Pfenning, Meinig & Partner

(57) **Abstract**

A digital camera is equipped to transmit and receive still or moving images between a local user and a remote user. The digital camera includes a lens and image sensor oriented away from the local user. The lens and digital sensor are for acquiring images of a scene visible to the local user. A display screen is oriented toward the local user. The display normally shows images acquired by the lens and sensor. The images can be transmitted to a remote user. The user can also select a mode of operation where an image acquired and transmitted by a remote user is displayed. Audio communication and a pointing device can be used to enable a discussion between users about an image.

## Description

### FIELD OF THE INVENTION

The present invention relates generally to digital cameras, and more particularly to digital cameras equipped to share images among multiple users.

### BACKGROUND OF THE INVENTION

Digital cameras have be come common. Some of these cameras are equipped with communications links.

U.S. Patent No. 5,606,365 describes an interactive camera for network processing of images captured by a digital still camera. A simplified digital camera without signal compensating and processing circuits is employed by a user to capture an image and to transmit raw image information sets along with a camera identification code through an interactive television network to an interactive control node for processing.

U.S. Patent 5,541,656 describes a hand-held digital camera including means for receiving an image and converting the image to a digital file of image data. The camera includes a memory for storing the image data, and a communication port for communicating between the hand-held digital camera and a digital computer.

U.S. Patent 5,768,633 describes a camera used with a wireless system. The camera includes means for capturing an image, a receiver for receiving a wireless signal from the wireless communication system, a decoder for decoding the wireless signal obtained by the receiver and storage for storing the decoded wireless signal and the image. A trigger signal from the camera can be used to initiate transmission of the wireless signal from the wireless communication system. Moreover, the wireless signal contains an internet address for accessing further information about an item being photographed.

None of the above prior art digital cameras allow users to communicate with each other, or to share images for the purpose of discussion. Therefore, there is a need for digital cameras that allows users to share images, and to discuss these images.

The use of a video phone unit for transmitting images acquired by a video camera has developed along with the increasing use of digital communication networks. In most conventional video phone units, the camera is used to acquire videos of the speakers at opposite ends of the communication link.

U.S. Patent No. 5,191,601 describes a video phone unit that includes a display for showing a received picture transmitted from the other party and a television camera for photographing a subject for producing a photographed picture on one party side.

U.S. Patent No. 5,111,498 describes a hinged-case sound and vision communications terminal configured as a video-phone. The video phone includes a case containing a display screen monitor, a camera, and an electronic assembly for control.

U.S. Patent No. 5,872,922 shows a video conference platform includes a graphical user interface for configuration and control of a video conference. In particular, the graphical user interface allows for "windows" type operations to control various aspects of the video conference, including initial configuration, camera control, and data transmission.

U.S. Patent No. 4,264,928 describes a conference video system including a plurality of conference seats, at each of which is a microphone. The system also includes a TV camera and a pivotable mirror which directs light from the conference seats to the TV camera. Each of the microphones is coupled through circuit elements to a servomotor(s) which positions the mirror to focus on the speaker and aims the camera's field of vision toward active audio. The electronic portion of the system utilizes the difference between the times at which two adjacent microphones receive a speaker's voice to generate a signal used to drive the servomotor to perform its mirror-positioning function.

As a characteristic, prior art video phones typically show the user or users at one end of the communication link to a user at the other end, and vise versa. This gives the users an impression that they are speaking face-to-face. Prior art video phone units and video conference systems are not well suited for anything else than allowing the sharing of a conversation. Therefore, there remains a need for a camera that allows users to share images, and to discuss these images.

### SUMMARY OF THE INVENTION

A digital camera is equipped to transmit and receive still or moving images between a local user and one or more remote users. The digital camera includes a lens and image sensor oriented away from the local user. The lens and digital sensor are for acquiring one or more images of a scene visible to the local user. A display screen is oriented towards the local user. The display normally shows images acquired by the lens and sensor. The images can be transmitted to one or more remote users. The user can also select a mode of operation where an image acquired and transmitted by a remote user is displayed.

The camera is also equipped with a cursor control button. A cursor is shown on the display screen in response to the user manipulating the cursor control button. In a multi-user conversation, the cursor associated with each user can be shown distinctively, for instance using a different color. A speaker and a microphone are used for communicating audio signals between users as in a conference call.

### BRIEF DESCRIPTION OF THE DRAWINGS

Figure 1 is a front view of a digital transceiver camera according to the present invention; and
Figure 2 is a back view of the digital transceiver camera of Figure 1.

### DETAILED DESCIPTION OF THE PREFERRED EMBODIMENT

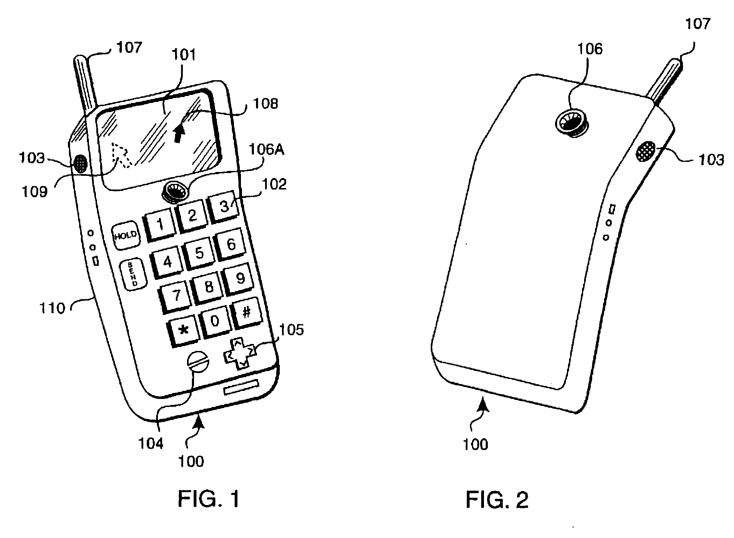

Figures 1 and 2 show the front and back of a digital transceiver camera 100 according to the present invention. The components of the digital transceiver camera 100 are integrated in a single housing 110, preferably portable. The front side of the camera, that is, the side normally facing a local user, includes a display screen 101, buttons 102, a speaker 103, a microphone 104, and a cursor control button 105. The back of the digital camera, that is the side facing away from the local user, includes a lens and sensor 106. The unit is also equipped with means 107 for communication, e.g., a wireless cellular transceiver.

In an alternative embodiment, the camera is configured with a second lens and sensor 106a to give the digital transceiver camera video phone capabilities. One of the buttons 102 can be used to select which lens and sensor to couple to the display screen 101.

The camera 102 can use a Mitsubishi Electric Inc. "artificial retina" (AR), part number M64289U for acquiring images. The AR is a CMOS image sensor with 352x288 color sensitive pixels. The AR chip can achieve high performance at low power consumption. The image sensor can be coupled to a image processing system, e.g., a Mitsubishi Electric Inc. single chip CMOS RISC-based microcomputer, part number M32000D3FP. This chip includes a 32-bit processor and 1MB of DRAM and a 4KB bypass cache. The sensor and micro-controller together can be obtained for tens of dollars satisfying the need for relatively simple components having mass market appeal at a reasonable cost. The image processor can perform image storage, retrieval, and compression using conventional techniques.

The digital transceiver camera 100, can be used in several distinct modes: single image capture mode, single image transmission mode, video image transmission mode, and image reception mode.

In single image capture mode, the digital transceiver camera 100 acts like a digital camera with a lens 106 and the display screen 101 acting as a view finder. When the camera is appropriated aimed, one of the buttons 102 is used to capture a single image. Multiple images can be stored in the camera for later use or downloading as in a standard digital camera.

In single image transmission mode, the digital transceiver camera 100 is used to communicate the image acquired in single image capture mode to one or more other users. This mode is triggered by pressing one of the buttons 102. After this mode is entered, the last image acquired, or some other selected image, is transmitted to all the other connected users. After the image is transmitted, all the users, including the local sending user, see the same image on their displays. The users can then discuss the image using the audio communication hardware built into the digital transceiver camera e.g., speaker 103, microphone 104, and cellular telephone circuitry.

In addition to audio communication, the users can communicate by means of pointing devices or cursors. Using the cursor control button 105, the sending user can control the position of a cursor 108 on the display screen 101. This cursor is shown on the sender's display screen and also on the display screen of every receiving user. This allows the sender to point at parts of the image while speaking.

Each receiving user also has a cursor control button. A given receiving user can use their control button to control a cursor that is also shown to every user in the conversation. In order to indicate which cursor is associated with which user, the various cursors can be rendered in different colors or as different styles of arrows, e.g., as shown at 109.

Multiple cursors can be shown at once. Alternatively, just the cursor of the user who is speaking can be shown. Note that the audio communication proceeds as in an audio conference call with one speaker being selected at a time and the corresponding audio communicated to all the other users. Note further that at a given moment the user that is speaking may be different from the user that is sending the image to the other users. This is normal as a conversation about a given image proceeds.

There are several things that are important to note about single image transmission mode. The image transmission occurs before the conversation about the image, not during it. Therefore, the transmission can occur over a low bandwidth connection. The only data that are transmitted during the conversation are the audio and cursor positions. The latter requiring only a few bits per second of information.

All the participants in a conversation can be using similar digital transceiver cameras; however this need not be the case. Only the sending user needs to have an image sensor. Further, receiving users that are in fixed locations need not use portable devices. For example, suppose that the sending user is a maintenance person who is using his digital transceiver camera to ask a question of his supervisor at a central site. The supervisor may make use of a high resolution display and may not need an image sensor for his part of the conversation.

It is worthy of note that the sender can send a high resolution image that the receiver can view on a high resolution display even if the sender's display 108 is not a high resolution display.

Video image transmission mode is the same as single image transmission mode except that the sender's digital transceiver camera captures and transmits images continuously. This requires much greater bandwidth and requires the lens 106 to be continuously trained on the target. However, video mode can convey important additional information in some situations.

In contrast with the prior art, the unit 100 does not show remote users, and the remote user does not see the local user, unless the second lens 106a is activated during video image transmission mode. Instead, the local and remote users see a scene or item that the users want to discuss pointing out particularities with the cursor 108. That is, unlike video phones, the image sensor points away from the local user. Also unlike video phones, the acquiring, transmitting, receiving, and displaying of images do not need to occur concurrently. The memory of the image processor can be used to store images to be discussed later.

Image reception mode is described by implication above. At any given moment, all the participants in a conversation other than a single sending user are in image reception mode. They see the image sent by the sending user and can discuss this image with the other users, optionally using their pointing devices.

With the various communication modes above, standard central station conference call equipment can be used to connect multiple users and mediate a conversation, e.g., determining which user can be heard at a given moment. This allows digital transceiver cameras to be used without any change in standard communications infrastructure.

Although the invention has been described by way of examples of preferred embodiments, it is to be understood that various other adaptations and modifications may be made within the spirit and scope of the invention. Therefore, it is the object of the appended claims to cover all such variations and modifications as come within the true spirit and scope of the invention.

## Claims

1. A digital camera for transmitting and receiving still or moving images between a local user and a remote user, comprising:
a lens and image sensor oriented away from the local user, the lens and image sensor for acquiring images of a scene visible to the local user;
a display screen oriented towards the local user, the display for showing the images acquired by the lens and sensor as well as images transmitted by remote users; and
communication means for transmitting and receiving the images.

2. The digital camera of claim 1 further comprising:
a cursor control button; and
a cursor shown on the display screen in response to the user manipulating the cursor control button; and
communication means for transmitting and receiving cursor position.

3. The digital camera of claim 1 further comprising:
a speaker, and a microphone for communicating audio signals.

4. The digital camera of claim 1 wherein the camera is portable.

5. The digital camera of claim 1 further comprising:
means for selecting a first and second display mode, a first display mode displaying a locally acquired image, and a second display mode displaying a remotely acquired image.

6. The digital camera of claim 1 further comprising:
means for selecting a first and second transmission mode, a first transmission mode transmitting a single locally acquired image, and a second transmission mode transmitting continuously acquired video.
